# EUROPÄISCHE PATENTSCHRIFT

(11) **EP 2 191 725 B1**
(45) Veröffentlichungstag und Bekanntmachung des Hinweises auf die Patenterteilung: **27.06.2018**
(21) Anmeldenummer: 09014448.6
(22) Anmeldetag: 19.11.2009
(51) Int. Cl.: A22C 11/00, B65B 13/26, B65B 25/06

(54) **Vorrichtung zum wendelförmigen Umschnüren einer Ware**
Device for helically strapping a good
Dispositif destiné à ceindre en forme d'hélice une marchandise

(30) Priorität: 28.11.2008 DE 102008059662
(43) Veröffentlichungstag der Anmeldung: 02.06.2010
(73) Patentinhaber: INOX Meccanica S.R.L., 46040 Solarolo di Goito (Prov. of Mantova) (IT); Martin Weinert Maschinenbau GmbH, 69412 Eberbach (DE)
(72) Erfinder: Weinert, Martin, 74821 Mosbach (DE); Bonatti, Luca, 25100 Brescia (IT)
(74) Vertreter: Weber & Seidel

(56) Entgegenhaltungen:
- EP-A1- 1 752 045
- DE-B- 1 177 969
- DE-B3-102004 056 864
- DE-C1- 4 425 233
- FR-A- 1 505 457

## Beschreibung

Die Erfindung betrifft eine Vorrichtung zum wendelförmigen Umschnüren einer Ware mit einer Schnur, wobei die Ware auf einer Warenauflage angeordnet ist und die Schnur mittels einer Umschnürungseinrichtung mit einem Schnurvorrat und Mitteln zur Führung der Schnur um die zu umschnürende Ware herumgeführt wird, wobei eine Schnurklemme, Mittel zum Durchtrennen und Mittel zum Verbinden vom Schnüren der Befestigung und Durchtrennung der Schnur dienen.

Derartige Umschnürungen von Waren wurden, bevor dazu Plastikbänder eingesetzt wurden, für alle Arten von Verpackungen verwendet. Heute werden solche Umschnürungen noch vorwiegend im Lebensmittelbereich eingesetzt, vor allem bei der Fleisch- und Wurstherstellung, beispielsweise zum Herstellen von Rollbraten oder Rollschinken. Der Gegenstand der Erfindung ist daher konstruktiv für solche Waren ausgelegt, was natürlich ihre Verwendung für Waren ähnlicher Beschaffenheit, also eine längliche Form eines Materials, nicht ausschließt.

Eine Vorrichtung dieser Art ist aus der DE 10 2004 056 864 B3 bekannt. Das Erfindungswesentliche dieser Vorrichtung besteht jedoch darin, daß eine Einrichtung zur Schaffung eines zusätzlichen zweiten Schnurvorrats - gegenüber dem ersten Schnurvorrat für die Umschnürung - vorgesehen ist, der beim wendelförmigen Umschnüren wieder abgezogen und unter die Wendel der Umschnürung gelegt wird. Die Vorrichtung sieht dann nach der Umschnürung eine Zusammenfügung, vorzugsweise Verknüpfung des Schnurendes des zweiten Schnurvorrats mit der Schnur der wendelförmigen Umschnürung vor. Diese Art von wendelförmiger Umschnürung hat den Nachteil, daß die zu umschnürenden Waren in ihrer Länge der Länge des zweiten Schnurvorrats entsprechen müssen. Damit begrenzt der maximal mögliche zweite Schnurvorrat auch die maximale Warenlänge. Somit ist entweder eine aufwendige Mechanik zur Bildung eines zweiten Schnurvorrats erforderlich, um diesen der Warenlänge anzupassen, oder der Einsatz der Vorrichtung ist diesbezüglich stark limitiert.

Es ist in dieser Schrift zwar auch ein Verfahren mit einer wendelförmigen Umschnürung offenbart, bei der der zweite Schnurvorrat kürzer gewählt ist und das Ende des zweiten Schnurvorrats durch darüber gelegte wendelförmige Wicklungen gehalten wird. Dies ermöglicht es, beliebig lange Waren zu umschnüren, wobei dann das Ende der Wicklungen ohne die Verknüpfung mit dem Ende des zweiten Schnurvorrats festgelegt werden muß. Letzteres kann durch eine Verbindung mit einer der letzten wendelförmigen Wicklungen erfolgen. Die offenbarte Vorrichtung der DE 10 2004 056 864 B3 ist jedoch konstruktiv nicht dafür vorgesehen, das vorgenannte Umschnürungsverfahren vorzunehmen, ohne daß ergänzende manuelle Eingriffe die dafür fehlenden Maschinenfunktionen erfüllen müssen. Warum dies so ist, wird weiter unten im Vergleich zur vorliegenden Erfindung erläutert.

Der Erfindung liegt daher die Aufgabe zugrunde, eine Vorrichtung der eingangs genannten Art derart konstruktiv und funktional weiterzubilden, daß die Maschinenfunktionen wendelförmige Umschnürungen von Waren verschiedener Länge und nahezu beliebig langer Waren in vorgenannter Art auf einfache Weise vornehmen können. Insbesondere soll auch dabei nicht mehr als eine Verbindung von Schnüren, zum Beispiel Verknüpfung, vorgesehen sein und die Vorrichtung soll nach Abarbeitung aller Verfahrensschritte wieder für den nächsten Arbeitsgang bereitstehen.

Die Aufgabe wird erfindungsgemäß dadurch gelöst, daß eine Vorrichtung der eingangs genannten Art mit einer Steuerung und Antriebsmitteln für die Durchführung folgender Arbeitsschritte mittels der ebenfalls folgenden konstruktiven Anpassungen ausgebildet ist:
a) Unter Klemmung des Schnurendes in der Schnurklemme wird die Schnur mittels der Umschnürungseinrichtung um die auf der Warenauflage liegende Ware so lange herumgeführt, bis die Wicklungen der Schnur selbsthemmend auf der Ware halten,
b) die Schnurklemme ist derart ausgebildet, daß sie das Schnurende durch aktives Öffnen mit Beginn des Warenvorschubs oder kurz nach dem Beginn eines Warenvorschubs dadurch losläßt, daß sie die Klemmkraft zumindest im Zeitpunkt des Beginns des Warenvorschubs derart vermindert, daß der beginnende Warenvorschub das Schnurende aus der Schnurklemme zieht,
c) über der Warenauflage ist eine Haltevorrichtung für die Ware vorgesehen, die diese für eine Umschnürung unter Ermöglichung eines Warenvorschubs positioniert,
d) die Umschnürungswendel werden mittels der Umschnürungseinrichtung dadurch aufgebracht, daß diese bei gleichzeitigem Warenvorschub die Ware umrundet,
e) ein Umlenkelement (7') wird in eine Position verbracht, in der es die zwischen Ware (1) und Umschnürungseinrichtung (6) verlaufende Schnur (2) bei einer weiteren Umrundung durch die Umschnürungseinrichtung (6) aufnimmt,
f) die Schnurklemme (7) wird in eine Position verbracht, in der sie durch eine nochmalige Umrundung der Ware (1) durch die Umschnürungseinrichtung (6) die Schnur (2) unter Bildung einer um die Ware (1) gelegten Schlaufe (20) aufnimmt,
g) das Mittel (9) zum Verbinden (14) von Schnüren verbindet alle drei von der Ware (1) kommenden Schnurstränge (15, 16, 17) miteinander,
h) die Mittel (8) zum Durchtrennen von Schnüren trennen zwischen der Verbindung (14) der Schnurstränge (15, 16, 17) und der Schnurklemme (7) den zum Schnurvorrat (4) verlaufenden Schnurstrang (17) und mindestens einen weiteren über das Umlenkelement (7') verlaufenden Schnurstrang (15, 16).

Die Ausgangsposition der Vorrichtung besteht darin, daß die Schnur mit ihrem Ende in der Schnurklemme geklemmt ist und von dort in die Umschnürungseinrichtung läuft, auf der sich der Schnurvorrat und Mittel zur Führung der Schnur befinden. Auf die Warenauflage wird dann eine zu umschnürende Ware verbracht und diese von der Umschnürungseinrichtung so lange umkreist, bis die Wicklungen der Schnur selbsthemmend auf der Ware halten (Vorrichtung definiert durch Arbeitsschritt a₎).

In Anpassung an den nächsten Arbeitsschritt (konstruktive Anpassung und Definition der Vorrichtung durch Arbeitsschritt c₎) ist die Schnurklemme derart ausgebildet, daß sie das Schnurende mit oder kurz nach Beginn des Warenvorschubs losläßt. Dabei gibt es zwei Alternativen: Entweder die Schnurklemme wird aktiv geöffnet, oder die Klemmkraft ist zumindest zu diesem Zeitpunkt derart vermindert, daß der beginnende Warenvorschub das Schnurende aus der Schnurklemme zieht.

Im Gegensatz dazu sieht die Vorrichtung der DE 10 2004 056 864 B3 eine Einrichtung zur Bildung eines zweiten Schnurvorrats vor, der während des Warenvorschubs entlang der Ware geführt wird, so daß das hinter dem zweiten Schnurvorrat liegende Schnurende in der Schnurklemme verbleibt.

In Anpassung an die erfindungsgemäße Funktionsweise der Vorrichtung (konstruktive Anpassung gemäß Merkmal c₎) ist über der Warenauflage eine Haltevorrichtung für Waren vorgesehen, die diese für eine Umschnürung unter Ermöglichung eines Warenvorschubs positioniert. Diese Maßnahme ist erforderlich, da die Ware wegen des Loslassens des Schnurendes durch die Schnurklemme nicht mehr von diesem Teil der Schnur in Position gehalten wird. Die Umschnürung einer Ware ohne einen solchen Halt ist jedoch meist nicht möglich, da das Gewicht der Ware nicht ausreicht, um sie bei der Umschnürung mit der erforderlichen Schnurspannung in Position zu halten.

Im Gegensatz dazu ist beim oben genannten Stand der Technik keine Haltevorrichtung für die Ware vorgesehen, da dieser Halt durch die Zugkraft des zum zweiten Schnurvorrat verlaufenden Schnurstrangs bewirkt wird.

Das Merkmal d) definiert die Vorrichtung schließlich durch den Arbeitsschritt d), wobei wie im Stand der Technik die Umschnürungswendel mittels der Umschnürungseinrichtung dadurch aufgebracht wird, daß diese bei gleichzeitigem Warenvorschub die Ware umrundet. Dabei ist die Länge der umschnürten Ware jedoch nicht wie beim Stand der Technik durch einen zweiten Schnurvorrat vorgegeben und begrenzt, sondern nur durch den Schnurvorrat des Garnrollenbehälters der Umschnürungseinrichtung begrenzt. Dieser reicht jedoch im Gegensatz zu dem zweiten Schnurvorrat des Standes der Technik unzweifelhaft für alle denkbaren Warenlängen aus. Vor allem braucht dieser Schnurvorrat nicht entsprechend der Warenlänge bereitgestellt zu werden. Er wird einfach so groß ausgebildet, daß er für möglichst viele Warenumschnürungen reicht. Dabei kann die Länge der Ware auch von einer Ware zur anderen Ware variieren, ohne daß irgendeine Einstellungsänderung vorgenommen werden muß.

Das Merkmal e₎ definiert die Vorrichtung durch einen Arbeitsschritt e₎, nämlich, daß ein Umlenkelement in eine Position verbracht wird, in der es die zwischen Ware und Umschnürungseinrichtung verlaufende Schnur bei einer weiteren Umrundung durch die Umschnürungseinrichtung aufnimmt. Als Ergebnis dieser Funktion der erfindungsgemäßen Vorrichtung läuft jetzt ein Schnurstrang, der von der Ware kommt und zum Schnurvorrat führt, über das Umlenkelement.

Da bei der Vorrichtung des Standes der Technik die Schnurklemme das Schnurende des zweiten Schnurvorrats, welcher bei der Umschnürung längs der Ware gelegt wurde, nie losgelassen hat, stellt sich dort durch den letzten Arbeitsschritt vor der Verbindung der Schnurstränge die Situation ein, daß sich zwei von der Ware kommende Schnurstränge in der Schnurklemme befinden. Deshalb können dort diese Schnurstränge verbunden, beispielsweise verknüpft werden und - von der Ware aus gesehen - hinter der Verknüpfung abgeschnitten werden. Damit ist bei der Vorrichtung des Standes der Technik die Umschnürung beendet und die Vorrichtung befindet sich wieder in der Ausgangsposition, in der die Schnur mit ihrem Ende in der Schnurklemme geklemmt ist.

Da die erfindungsgemäße Vorrichtung in dieser Arbeitsposition nur eine von der Ware kommende Schnur aufweist, die an dem Mittel zum Verbinden von Schnüren vorbeilaufend über das Umlenkelement zum Schnurvorrat führt, können hier auch keine zwei Schnüre verbunden werden, um die Umschnürung der Ware so zu befestigen, daß sie sich nicht aufwickeln kann.

Deshalb muß hier (im Gegensatz zur Vorrichtung des Standes der Technik) ein weiterer Arbeitsschritt f₎ erfolgen, nämlich, daß durch die nochmalige Umrundung der Ware durch die Umschnürungseinrichtung die Schnur unter Bildung einer um die Ware und das Umlenkelement gelegten Schlaufe von der Schnurklemme aufgenommen wird. Das Ergebnis dieses Arbeitsschritts ist, daß sich zwei Schnurstränge als eine Schlaufe der Schnur um die Ware und das Umlenkelement legen und ein dritter Schnurstrang von der Ware über die Schnurklemme zum Schnurvorrat der Umschnürungseinrichtung verläuft.

In einem weiteren Arbeitsgang g₎ verbinden Mittel zum Verbinden von Schnüren alle drei von der Ware kommenden Schnurstränge miteinander. Dabei entsteht eine Befestigungsschlinge, deren beide Enden mit der von der Umschnürungswendel kommenden Schnur verknüpft sind. Im Gegensatz dazu waren es beim Stand der Technik nur zwei Schnurstränge.

Im letzten Arbeitsgang h) trennen schließlich die Mittel zum Durchtrennen von Schnüren zwischen der Verbindung der Schnurstränge und der Schnurklemme beziehungsweise dem Umlenkelement den zum Schnurvorrat verlaufenden Schnurstrang und mindestens einen weiteren Schnurstrang, der in einer Schlaufe um Ware und Umlenkelement liegenden Schnur, wobei bei Durchtrennung von nur einem der beiden über das Umlenkelement verlaufenden Schnurstränge der andere von dem Umlenkelement entfernt wird. Es ist hier also beides möglich: Die beiden Schnurstränge der Schlaufe um Ware und Umlenkelement durchzutrennen, oder nur einen Schnurstrang und dann das noch auf dem Umlenkelement befindliche Ende der an einem Strang durchgeschnittenen Schlaufe von dem Umlenkelement zu entfernen. Im erstgenannten Fall würde ein kleines Schnurstück im Bereich des Umlenkelements verbleiben, das dann durch eine entsprechende Gestaltung herunterfällt oder sonstwie beseitigt und als Abfall entsorgt wird.

Nach diesem letzten Arbeitsgang h) ist das Ende des vom Schnurvorrat der Umschnürungseinrichtung kommenden Schnurstrangs in der Schnurklemme, womit die Vorrichtung zur nächsten Umschnürung einer Ware bereitsteht.

Durch die Erfindung wird erstmalig eine Vorrichtung verfügbar gemacht, bei der es durch rein maschinelle Handhabung möglich ist, eine Ware derart zu umschnüren, daß am Anfang einer Wendel das Schnurende durch darüber gelegte Wicklungen gehalten ist, dann nahezu beliebig viele Schnurwendel für eine Ware nahezu beliebiger Länge erzeugbar sind und am Ende der Wendel die Schnur dadurch festgelegt wird, daß eine um die Ware verlaufende Befestigungsschlinge gebildet wird. Eine solche Ware weist nur eine Verknüpfung zur Bildung der Befestigungsschlinge auf, wird diese durchgetrennt, läßt sich die ganze Schnur ohne weiteres abwickeln, was gegenüber mehreren Schnurverbindungen, meist als Knoten ausgeführt, für den Verbraucher eine wesentlich einfachere und bequemere Handhabung ist.

Gegenüber der mit einer Vorrichtung gemäß der DE 10 2004 056 864 B3 umschnürten Ware ist der große Vorteil der, daß die Länge der Ware nicht durch die Länge eines zweiten Schnurvorrats begrenzt ist. Wollte man mit dieser Vorrichtung des Standes der Technik eine in oben genannter Weise umschnürte Ware herstellen, müßte man nach der Festlegung der Schnur durch Wicklungen (Merkmal a)), sofern dies überhaupt möglich ist, das Ende des zweiten Schnurvorrats herauszuziehen und danach die Ware für die Umschnürung von Hand festhalten, wobei der Vorschub zuzulassen oder zu bewirken ist. Am Ende der Umschnürung müßte man die Arbeitsweise dieser vorbekannten Vorrichtung in Richtung der Merkmale e), f), g) und h) ändern. Es wäre also wie bei der Erfindung eine zusätzliche Schlaufe um die Ware und das Umlenkelement zu legen, drei statt zwei Schnüre miteinander zu verbinden und zwei oder drei statt einer Schnur durchzutrennen. Erst durch die konstruktive Änderung der Schnurklemme derart, daß diese ein Schnurende im richtigen Zeitpunkt (Merkmal b₎) losläßt und die konstruktive Ergänzung unter Vorsehung einer Haltevorrichtung (Merkmal c₎) sowie einer veränderten Arbeitsweise ist es möglich, eine Vorrichtung verfügbar zu machen, welche mit den oben aufgeführten Arbeitsgängen die oben beschriebene Warenumschnürung herstellen kann.

Dabei kann die Vorrichtung sowohl vollautomatisch arbeitend in einen eben solchen Warenherstellungsprozeß integriert sein oder sie ist als Einzelmaschine ausgebildet, zu der die Ware von Hand zu- und abgeführt wird, die einzelnen Arbeitsschritte können dann nacheinander automatisch abgearbeitet werden.

Bei der Erfindung kann das Umlenkelement als separates Element ausgebildet sein oder die Schnurklemme kann so ausgebildet sein, daß sie auch als Umlenkelement dient. Dann ist es jedoch erforderlich, daß die Schnurklemme bezüglich Klemmflächen und Klemmkraft derart eingerichtet ist, daß bei dem Herausziehen eines Schnurstrangs der zum Schnurvorrat verlaufende Schnurstrang in der Schnurklemme verbleibt. Dies ist deshalb erforderlich, weil nur einer der nicht zum Schnurvorrat verlaufenden Schnurstränge durchtrennt wird und der andere dieser Schnurstränge aus der Schnurklemme herausgezogen werden muß. Daß der zum Schnurvorrat verlaufende Schnurstrang in der Schnurklemme verbleiben muß, hat seinen Grund darin, daß dies die Maschineneinstellung ist, bei der diese für den nächsten Umschnürungsvorgang bereit steht.

Für den Fall, daß das Umlenkelement als ein separates Bauteil ausgebildet ist, ist vorgesehen, daß das Umlenkelement neben der Schnurklemme angeordnet ist und beide derart ausgebildet sind, daß sie wahlweise die von Umschnürungseinrichtung kommende Schnur aufnehmen können. Dies hat den Vorteil, daß die oben genannte Klemmkrafteinstellung zur Bewirkung des Herausziehens eines Schnurstrangs und dem Verbleiben des anderen Schnurstrangs - was zu leicht zu Fehlfunktionen führen kann - nicht erforderlich ist. Von der Umlenkeinrichtung läßt sich, da diese Schnüre nicht festklemmt, sowohl das oben schon beschriebene Schnurende als auch das kleine Schnurstück ohne weiteres entfernen und letzteres auch entsorgen.

Vorzugsweise sind Mittel zur Einstellung der Klemmkraft der Schnurklemme vorgesehen. Dies kann dazu dienen, daß durch eine verminderte Klemmkraft die Schnurklemme das Schnurende dann losläßt, wenn der Warenvorschub beginnt.

Es kann das Mittel zur Einstellung der Klemmkraft der Schnurklemme derart ausgebildet sein, daß die Schnur für den Arbeitsschritt a₎ derart straff gespannt werden kann, daß die selbsthemmenden Wicklungen erzeugbar sind, für den Arbeitsschritt b) jedoch so gering geklemmt ist, daß sie durch einen beginnenden Warenvorschub aus der Schnurklemme gezogen wird, ohne daß die Schnur nennenswert in die Ware einschneidet. Auf diese Weise läßt sich durch die Klemmkrafteinstellung genau vorgeben, in welcher Warenposition bei Beginn des Warenvorschubs das Schnurende von der Schnurklemme losgelassen wird.

Eine weitere Möglichkeit besteht darin, daß die Schnurklemme mit Mitteln zur Bewirkung ihrer Öffnung ausgestattet ist. Dadurch ist es möglich, die Schnurklemme gezielt zu dem Zeitpunkt zu öffnen, in dem die Schnur durch die Wicklungen selbsthemmend auf der Ware festgelegt sind.

Insbesondere dann, wenn die Schnurklemme mit Mitteln zur Bewirkung ihrer Öffnung ausgestattet ist, ist es weiterhin zweckmäßig, wenn die Vorrichtung derart ausgebildet ist, daß bei der Herstellung der Wicklungen zur Festlegung der Schnur an der Ware ein kleiner Teil des Warenvorschubs stattfindet, um - zur Erzeugung einer noch besseren Haltekraft auf der Ware - die zur Schnurklemme verlaufende Schnur durch Wicklungen zu überdecken und dann erst die Mittel zur Öffnung der Schnurklemme betätigt werden. Für den oben genannten Fall, daß die Schnur aus der Schnurklemme gezogen wird, wenn der Warenvorschub beginnt, tritt diese Überdeckung der Schnur durch Wicklungen automatisch ein, da die Schnur die Schnurklemme erst nach einem kleinen Vorschub verläßt.

Zweckmäßigerweise ist ein Förderband zur Bewirkung des Warenvorschubs vorgesehen. Dies hat den Vorteil, daß alle Arbeitsschritte exakt mit einer bestimmten Warenposition verknüpft werden können, da die Warenposition durch die Stellung des Förderbandes vorgegeben ist. Des weiteren läßt sich auf diese Weise auch ein exakter Warenvorschub erzeugen, der mit der Herumführung der Umschnürungseinrichtung um die Ware derart synchronisiert werden kann, daß eine gleichmäßige wendelförmige Umschnürung der Ware entsteht.

Das Mittel zum Verbinden von Schnüren kann unterschiedlich ausgestaltet sein, es kann sich zum Beispiel um eine Vorrichtung handeln, die die Schnüre mit Clips verbindet. Vorzugsweise ist das Mittel zum Verbinden von Schnüren jedoch eine Verknotungseinrichtung. Da für die Bewirkung einer derartigen Verknotung eine gewisse Schnurlänge der zu verbindenden Schnurstränge erforderlich ist, ist es zweckmäßig, wenn vor oder während der Verknotung ein Verschieben der Ware zur Verknotungseinrichtung stattfindet. Dies ist auf jeden Fall dann erforderlich, wenn die Schnur keine hohe Elastizität aufweist. Die Verschiebung der Ware kann dadurch bewirkt werden, daß sie durch den Zug der Verknotungseinrichtung an den Schnursträngen erfolgt. Zu diesem Zweck muß die Haltevorrichtung die Ware in Verschieberichtung freigeben. Alternativ können auch Mittel zum Verschieben der Ware vorgesehen sein, beispielsweise dergestalt, daß die Haltevorrichtung die Ware in dieser Richtung verschiebt.

Soll am Ende der wendelförmigen Umschnürung der Ware das Umlenkelement wobei auch die Schnurklemme als Umlenkelement dienen kann - in eine Position zur Aufnahme der Schnur gemäß Arbeitsschritt e) verbracht werden, so ist dies auf zweierlei Art möglich: Zum einen kann das Umlenkelement in die Ebene verbracht werden, in der sich die Schnur von der rotierenden Umschnürungseinrichtung zur Ware verlaufend bewegt. Eine andere Möglichkeit besteht darin, daß das Umlenkelement in dieser Ebene angeordnet ist und in die Position zur Aufnahme der Schnur gemäß dem Arbeitsschritt e) dadurch verbracht wird, daß eine Schnurlenkung die Schnur bei der Bildung der wendelförmigen Umschnürung an der Schnurklemme und dem Umlenkelement vorbeileitet und daß dann diese Schnurlenkung derart bewegt wird, daß die Schnur gemäß den Arbeitsschritten e) oder f) in das Umlenkelement oder in die Schnurklemme gelegt wird.

Die Vorrichtung ist mit einer Steuerung und Antriebsmitteln zur Vornahme aller Arbeitsschritte ausgestattet. Auch eine Teilautomatisierung ist selbstverständlich denkbar. Für eine Vollautomatisierung der Warenherstellung ist es zweckmäßig, wenn die Vorrichtung mit einer Warenfördereinrichtung für die Zuführung und den Abtransport der Waren nach erfolgter Umschnürung ausgestattet ist, wobei die Vorrichtung mit mindestens einem mit der Steuerung verbundenen Sensor ausgestattet ist, der die Positionen der geförderten Waren erfaßt, damit die Steuerung die entsprechenden Arbeitsschritte in den entsprechenden Positionen der Ware veranlassen kann. Auch ist es zweckmäßig, wenn mindestens ein mit der Steuerung verbundener Sensor vorgesehen ist, der die jeweilige Stellung der Umschnürungseinrichtung erfaßt, um diese exakt auf die Arbeitsschritte abzustimmen. Auf diese Weise ist dann die Vorrichtung zur vollautomatischen Fließbandproduktion befähigt, was das häufigste Einsatzgebiet sein dürfte.

Die Erfindung wird nachfolgend anhand eines in der Zeichnung dargestellten Ausführungsbeispiels erläutert. Es zeigen
- **Fig. 1**: eine Außenansicht eines Ausführungsbeispiels einer Umschnürungs-maschine sowie
- **Fig. 2**: eine Umschnürungseinrichtung und weitere Einzelelemente zur Erläuterung der erfindungsgemäßen Arbeitsweise,
- **Fig. 3**: eine Schnurführung der erfindungsgemäßen Vorrichtung vor der Verknotung,
- **Fig. 4**: die verknoteten Schnurstränge,
- **Fig. 5**: eine Warenumschnürung, hergestellt durch die erfindungsgemäße Vorrichtung und
- **Fig. 6**: eine Warenumschnürung, hergestellt durch eine Vorrichtung des Standes der Technik.

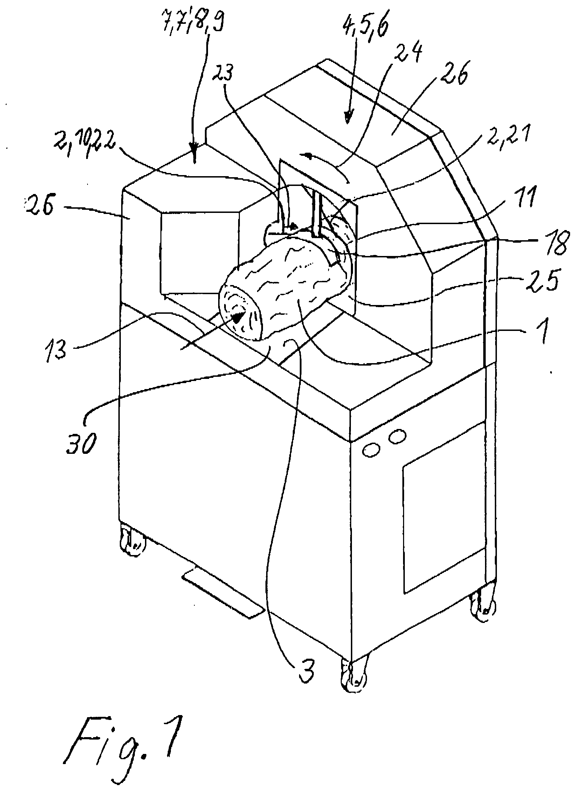

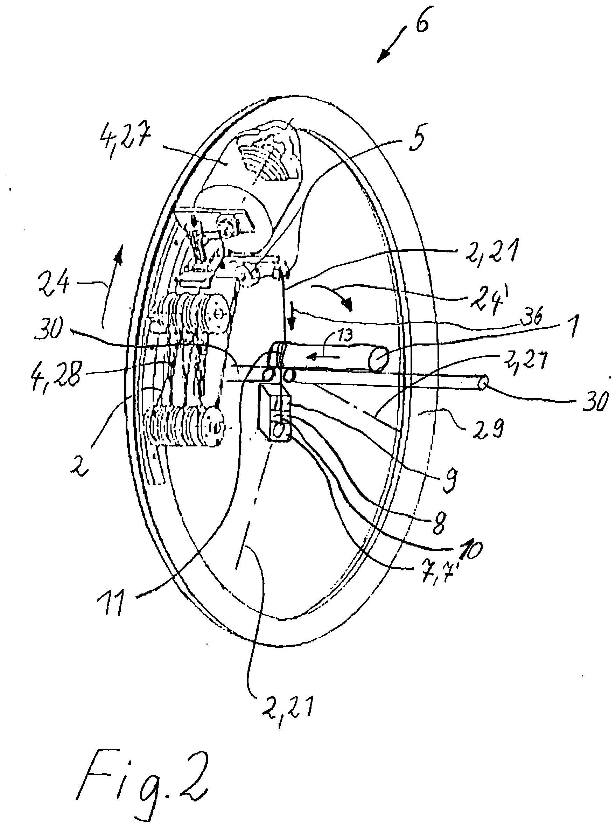

**Fig. 1** zeigt eine Außenansicht eines Ausführungsbeispiels einer erfindungsgemäßen Vorrichtung zum wendelförmigen Umschnüren einer Ware 1, auch Umschnürungsmaschine genannt. Da hier wesentliche Teile durch das Gehäuse 26 verdeckt sind, zeigt **Fig. 2** die Umschnürungseinrichtung 6 sowie weitere Funktionselemente.

In Fig. 1 ist zu erkennen, wie sich die Warenauflage 3 zu einem Tunnel 25 erstreckt, welcher von der Umschnürungseinrichtung 6 umfaßt ist. Auf der Warenauflage 3, die als Förderband 30 ausgebildet ist, befindet sich die Ware 1, welche gerade mit Wicklungen 11 zu Beginn der Umschnürung versehen wird, um das Schnurende 10 festzulegen.

**Fig. 2** zeigt die wesentlichen Funktionselemente. Zum Herstellen der Wicklungen 11 ist die Umschnürungseinrichtung 6 auf einem drehbar um den Tunnel 25 angeordneten Tragring 29 gelagert. Die Umschnürungseinrichtung 6 besitzt einen Schnurvorrat 4, welcher aus einem Gamrollenbehälter 27 und einem Schnurspeicher 28 besteht. Die Schnur 2 wird aus dem Schnurvorrat 4 in Richtung des Pfeils 36 abgezogen. Mittel 5 zur Führung der Schnur bilden anfänglich einen Schnurstrang, der mit dem Schnurende 10 in einer Schnurklemme 7 befestigt ist. Wird dann, wie in Fig. 1 und Fig. 2 dargestellt, eine Ware 1 in das Zentrum des Tragrings 29 durch das Förderband 30 verbracht, so hält das Förderband 30 so an, daß das vordere Ende der Ware 1 mit den Wicklungen 11 versehen werden kann, indem die Umschnürungseinrichtung 6 in Richtung des Pfeils 24 gedreht wird, und dadurch die Schnur 2 als Schnurstrang 21 in Richtung des Pfeils 24' die Ware 1 umrundet. Die Mittel 5 zur Führung der Schnur 2 beinhalten dabei auch eine Schnurbremse, mit welcher die Schnurspannung des Schnurabzugs 36 einstellbar ist. Nach einigen Wicklungen 11, welche einen Selbsthalt der Schnur 2 auf der Ware 1 gewährleisten, läßt die Schnurklemme 7 das Schnurende 10 los.

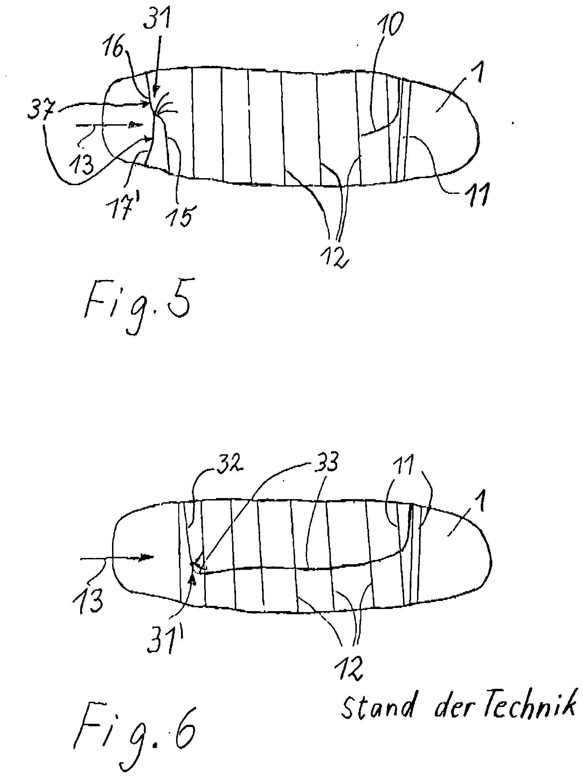

Danach verläuft die Schnur 2 nur noch unmittelbar aus der Umschnürungseinrichtung 6 zu der Ware 1, welche dann gleichmäßig in Richtung des Pfeils 13 einen Warenvorschub erhält. Dabei wird zu Beginn des Warenvorschubs 13 noch das Schnurende 10 überdeckt, so daß die Wicklung 11 sicher gehalten ist. In der Folge sind Warenvorschub 13 und die Drehung 24 der Umschnürungseinrichtung 6 so miteinander synchronisiert, daß gleichmäßige Umschnürungswendel 12 erzeugt werden, welche in Fig. 5 dargestellt sind. Damit die Ware 1 auch ohne den Halt durch das Schnurende 10 bei der Erzeugung der Umschnürungswendel 12 sicher auf der Warenauflage 3 liegt, ist eine Haltevorrichtung 18 vorgesehen. Diese ist in Fig. 1 symbolisch dargestellt, sie muß natürlich so ausgebildet sein, daß sie die Förderung der Ware 1 durch das Förderband 30 nicht behindert, also auf der Ware 1 gleitet oder rollt, oder sie bewegt sich mit dem Förderband 30 derart mit, daß sie ebenfalls den Warenvorschub 13 mitmacht.

Fig. 1 zeigt noch, wie bei der Schnurbefestigung durch die Wicklungen 11 das Schnurende 10 noch in der Schnurklemme 7 befindlich ist, und dadurch den von der Schnurklemme 7 kommenden Schnurstrang 22 bildet, der dann in Richtung des Pfeils 23 losgelassen wird, wenn der Warenvorschub 13 begonnen hat.

Weitere Bauteile, wie die Mittel 8 zum Durchtrennen von Schnüren und die Mittel 9 zum Verbinden von Schnüren sowie eine Schnurklemme 7 und ein Umlenkelement 7' befinden sich in Fig. 1 im Gehäuse 26, in **Fig, 2** sind sie dargestellt. Dabei befindet sich das Mittel 9 zum Verbinden von Schnüren, beispielsweise als Verknotungseinrichtung ausgebildet, weiter in Richtung des Zentrums des Tragrings 29 - und damit zur Ware 1 am nächsten liegend - danach gefolgt von Mitteln 8 zum Durchtrennen von Schnüren und weiter außen die Schnurklemme 7 und direkt neben dieser angeordnet das Umlenkelement 7'.

An dieser Schnurklemme 7 und dem Umlenkelement 7' bewegt sich die in Richtung des Pfeils 36 aus dem Schnurvorrat 4 abgezogene Schnur 2 vorbei, wenn die Umschnürungseinrichtung 6 sich in Richtung des Pfeils 24 bewegt. Der dadurch erzeugte Verlauf des Schnurstrangs 21 ist durch den Pfeil 24' symbolisiert, sowie dadurch, daß zwei weitere Positionen des Schnurstrangs 21 durch strichpunktierte Linien eingezeichnet sind. Die Schnurklemme 7 und das Umlenkelement 7' sind derart ausgebildet, daß sich die Schnur 2 bei dieser Bewegung 24' an ihnen vorbei bewegen kann, oder in die Schnurklemme 7 oder das Umlenkelement 7' eingelegt wird. Dazu sind die Schnurklemme 7 und das Umlenkelement 7' verschiebbar, oder es ist eine Schnurlenkung vorgesehen, die die Schnur vorbeileitet oder wahlweise einlegt.

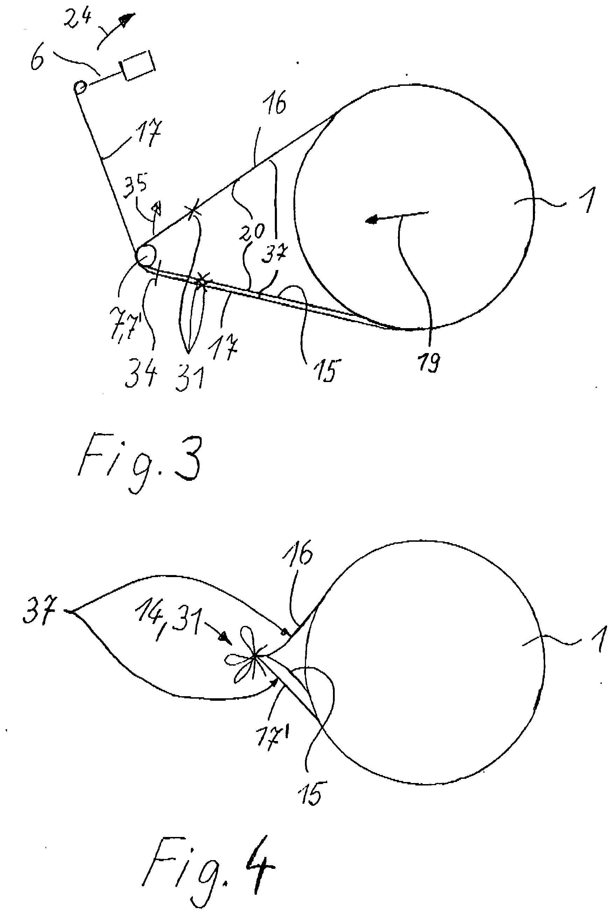

Während die Wicklungen 11 für den Halt der Schnur 2 auf der Ware 1 aufgebracht und die Umschnürungswendel 12 erzeugt werden, bewegt sich die Schnur 2 an der Schnurklemme 7 und an dem Umlenkelement 7' vorbei. Erst wenn die Umschnürungswendel 12 entlang der gesamten Ware 1 erzeugt sind, bewegt sich das Umlenkelement 7' in die Ebene, in der sich der Schnurstrang 21 um die Ware 1 herumbewegt. Es nimmt dabei den von der Umschnürungswendel 12 zur Umschnürungseinrichtung 6 führenden Schnurstrang 21 auf, und erzeugt mit einer weiteren Umrundung durch die Umschnürungseinrichtung 6 die Schnurstränge 15 und 16, die eine Schlaufe 20 bilden, die sich um die Ware 1 und das Umlenkelement 7' legt. Danach erfolgt eine weitere Umrundung der Ware 1 durch die Umschnürungseinrichtung 6, bei der sich der nächste Schnurstrang 17 in die Schnurklemme 7 legt, der dann von dort weiter zur Umschnürungseinrichtung 6 verläuft. Die nachfolgende Verknüpfung der Schnurstränge 15, 16, 17 sowie das Durchtrennen wird weiter unten zu Fig. 3 beschrieben.

Zu den Figuren 1 und 2 ist noch angemerkt, daß das Förderband 30 in der Ebene, in der der Schnurstrang 21 in Richtung des Pfeils 24' die Ware 1 umrundet, unterbrochen sein muß, damit die Schnur 2 um die Ware 1 herumgeführt werden kann.

**Fig. 3** zeigt eine Schnurführung der erfindungsgemäßen Vorrichtung vor der Bildung des Knotens 31, wobei hier mit Kreuzen dargestellt ist, daß drei Schnurstränge 15, 16 und 17 miteinander verknotet werden. Dabei ist der Arbeitsgang folgender:
Nach Vollendung der Umschnürungswendel 12 wird das Umlenkelement 7' in eine Position verbracht, in der es den von der Umschnürungseinrichtung 6 zur Ware 1 verlaufenden Schnurstrang 21 dann aufnimmt, wenn dieser das Umlenkelement 7' passiert. Dabei legt sich der von der Umschnürungswendel 12 kommende Schnurstrang als ein erster der Verknotung dienender Schnurstrang 15 zwischen Ware 1 und Umlenkelement 7'. Dann erfolgt eine weitere Umrundung der Ware 1 durch die Umschnürungseinrichtung 6, so daß ein Schnurstrang 16 gelegt wird, welcher von der Umlenkeinrichtung 7' zur Ware 1 zurück verläuft, und so eine Schlaufe 20 bildet. Bei der Weiterbewegung der Umschnürungseinrichtung 6 wird schließlich ein Schnurstrang 17 gelegt, der dann von der Schnurklemme 7 aufgenommen wird, und der in seinem weiteren Verlauf zum Schnurvorrat 4 der Umschnürungseinrichtung 6 verläuft, die hier symbolisch dargestellt ist.

Danach tritt das Mittel 9 zum Verbinden von Schnüren, beispielsweise eine Verknotungseinrichtung in Aktion, und fertigt unter Einbeziehung der Schnurstränge 15, 16 und 17 im Bereich der Kreuze einen Knoten 31 an. Um dies zu erleichtern, kann die Ware 1 in Richtung des Pfeils 19 verschoben werden. Ist dieser Knoten 31 gemacht, so tritt das Mittel 8 zum Durchtrennen von Schnüren in Aktion und stellt eine Durchtrennung 34 her, welche mindestens zwei Schnurstränge 15 und 17 oder 15 und 16 trennt, sie könnte aber auch den Schnurstrang 16 beziehungsweise 17 miterfassen, so daß drei Schnurstränge 15, 16, 17 getrennt werden. Werden nur die Schnurstränge 15 und 17 oder 15 und 16 durchgetrennt, so muß das auf der Umlenkeinrichtung 7' verbleibende Ende des Schnurstrangs 16 oder 17 von der Umlenkeinrichtung 7' heruntergezogen werden. Werden alle drei Schnurstränge 15, 16 und 17 durchgetrennt, so muß, wie der Pfeil 35 andeutet, das verbleibende Schnurstück von dem Umlenkelement 7' entfernt werden. Es ist entweder so ausgebildet, daß es in einen Aufnahmebehälter fällt, oder es wird auf andere Weise aus der Vorrichtung entfernt.

**Fig. 4** zeigt die verknoteten Schnurstränge 15, 16 und 17', wobei der Schnurstrang 15 ein von der Umschnürungswendel 12 kommender Schnurstrang ist, und der Schnurstrang 17' stammt aus dem Schnurstrang 17, der zum Schnurvorrat 6 weiterlief und durchgetrennt wurde. Im Ergebnis bilden dann die Schnurstränge 16 und 17' eine Befestigungsschlinge 37, welche über den Schnurstrang 15 mit der Umschnürungswendel 12 verbunden ist.

Die Verbindung 14 ist als Knoten 31 dargestellt. Zu diesem Knoten 31 ist noch anzumerken, daß die drei Enden der verknüpften Schnurstränge 15, 16 und 17 kleine Schlaufen bilden. Dies entspricht dem realen Arbeitsergebnis einer Verknotungseinrichtung, die keine Schnurenden zur Verfügung hat, welche sie bei der Knotenbildung durch einen Knoten hindurchziehen kann, wie man das bei von Hand gemachten Knoten gewöhnt ist Deshalb muß sie, ohne ein Schnurende zur Verfügung zu haben, den Knoten bilden, was nur unter Ausbildung von kleinen Schlaufen geht, welche die gleiche Anzahl aufweisen wie die verknoteten Schnurstränge, also hier drei kleine Schlaufen. Diese lassen sich ohne weiteres dadurch auflösen, daß man ihre Enden aus dem Knoten 31 zieht.

**Fig. 5** zeigt schließlich eine Warenumschnürung, hergestellt durch die erfindungsgemäße Vorrichtung. Man sieht am Anfang der Ware 1 die Wicklungen 11, welche das Schnurende 10 festlegen. Danach sind Umschnürungswendel 12 gelegt, wobei diese in beliebiger Länge gelegt werden können, wodurch auch sehr lange Waren 1 umschnürbar sind. Am Ende der Umschnürungswendel 12 verläuft ein Schnurstrang 15, der bereits oben als einer der zu verknüpfenden Schnurstränge 15, 16, 17 dargestellt wurde, zum Knoten 31. Der Schnurstrang 17 ist jetzt durchgetrennt und daher mit 17' bezeichnet, da er nicht mehr zum Schnurvorrat 6 läuft. Dieser Schnurstrang 17' bildet mit dem Schnurstrang 16 eine Befestigungsschlinge 37, welche den von der Umschnürungswendel 12 kommenden Schnurstrang 15 an der Ware 1 festlegt. Daß der Knoten 31 drei Schnurstränge verbindet, ist auch durch die drei aus dem Knoten 31 herausschauenden Enden ersichtlich.

**Fig. 6** zeigt im Vergleich dazu eine Warenumschnürung, hergestellt durch eine Vorrichtung des Standes der Technik. Wie oben bereits erläutert, war dort ein Schnurstrang 33 eines zweiten Schnurvorrats vorgesehen, der entlang der gesamten Umschnürungswendel 12 unter diese Wendel 12 an der Seite einer Ware 1 entlang geführt wurde, um dann mit einem Schnurstrang 32, der vom Ende der Umschnürungswendel 12 kommt, verknüpft zu werden. Dies ist mit dem Knoten 31' dargestellt, der durch die Verknüpfung zweier Schnurstränge 32 und 33 auch nur zwei heraustretende Enden aufweist. Wie leicht ersichtlich ist, konnte hier nur eine Ware 1 umschnürt werden, die nicht länger ist als der aus dem dort vorgesehenen zweiten Schnurvorrat stammende Schnurstrang 33. Dies bedeutete eine starke Limitierung des Einsatzes dieser Umschnürungsmaschine des Standes der Technik, welche erfindungsgemäß überwunden wurde.

Die Darstellung in der Zeichnung ist selbstverständlich nur eine mögliche Ausführungsform der erfindungsgemäßen Vorrichtung, eine Vielzahl konkreter Ausgestaltungen könnte auch auf andere Weise erfolgen. Wesentlich für die Erfindung ist letztendlich, daß die Vorrichtung nach Festlegung der Schnur 2 auf der Ware 1 durch Wicklungen 11 das Schnurende 10 aus der Schnurklemme 7 freigeben kann, und danach befähigt ist, die durch eine Haltevorrichtung 18 gehaltene Ware 1 mit einer beliebig langen Umschnürungswendel 12 zu versehen, um danach eine Befestigungsschlinge 37 zu bilden, welche den von der Umschnürungswendel 12 stammenden Schnurstrang 15 festlegt und dadurch die Umschnürung sicher auf der Ware 1 gehalten ist. Dabei muß wieder ein Schnurstrang 17 in die Schnurklemme 7 gelegt werden, damit die nächste Warenumschnürung erfolgen kann. Beim dargestellten Ausführungsbeispiel wurde auch auf Antriebsmittel, Sensoren und Steuerung nicht weiter hingewiesen, diese werden jedoch zweckmäßigerweise, wie oben bereits erwähnt, zu der beschriebenen Vorrichtung hinzugefügt.

### Bezugszeichenliste

- 1: Ware
- 2: Schnur
- 3: Warenauflage
- 4: Schnurvorrat
- 5: Mittel zur Führung der Schnur
- 6: Umschnürungseinrichtung
- 7: Schnurklemme
- 7': Umlenkelement
- 8: Mittel zum Durchtrennen von Schnüren
- 9: Mittel zum Verbinden von Schnüren
- 10: Schnurende
- 11: Wicklungen
- 12: Umschnürungswendel
- 13: Pfeil: Warenvorschub
- 14: Verbindung der Schnurstränge/Verbindung
- 15, 16: Schnurstränge, die als Schlaufe um Ware und Schnurklemme laufen
- 17: Schnurstrang von der Ware durch die Schnurklemme zum Schnurvorrat verlaufend
- 17': Schnurstrang, durchgetrennt
- 18: Haltevorrichtung
- 19: Pfeil: Verschieben der Ware zur Verknotungseinrichtung bzw. Verschieberichtung
- 20: Schlaufe
- 21: Schnurstrang, der von der Umschnürungseinrichtung zur Ware verläuft
- 22: Schnurstrang, von der Schnurklemme kommend
- 23: Pfeil: Loslassen des von der Schnurklemme kommenden Schnurstrangs
- 24: Pfeil: Drehrichtung der Umschnürungseinrichtung
- 24': Pfeil: Drehrichtung der von der Umschnürungseinrichtung kommenden Schnur
- 25: Tunnel
- 26: Gehäuse
- 27: Gamrollenbehälter
- 28: Schnurspeicher
- 29: Tragering (drehbar um den Tunnel)
- 30: Förderband (in der Ebene der Führung der von der Umschnürungseinrichtung kommenden Schnur unterbrochen)
- 31: Knoten
- 31': Knoten (Stand der Technik)
- 32: Schnurstrang, von der Umschntirungswendel kommend (Stand der Technik)
- 33: Schnurstrang des zweiten Schnurvorrats (Stand der Technik)
- 34: Durchtrennung
- 35: Pfeil: Entfernung des in der Schnurklemme verbleibenden Schnurstücks
- 36: Pfeil: Schnurabzug aus dem Schnurvorrat
- 37: Befestigungsschlinge

## Patentansprüche

1. Vorrichtung zum wendelförmigen Umschnüren einer Ware (1) mit einer Schnur (2), wobei die Ware (1) auf einer Warenauflage (3) angeordnet ist und die Schnur (2) mittels einer Umschnürungseinrichtung (6) mit einem Schnurvorrat (4) und Mitteln (5) zur Führung der Schnur (2) um die zu umschnürende Ware (1) herumgeführt wird, wobei eine Schnurklemme (7), Mittel zum Durchtrennen (8) und Mittel (9) zum Verbinden vom Schnüren (2) der Befestigung und Durchtrennung der Schnur (2) dienen, und wobei die Vorrichtung mit einer Steuerung und Antriebsmitteln für die Durchführung folgender Arbeitsschritte mittels der ebenfalls folgenden konstruktiven Anpassungen ausgebildet ist:
a) Unter Klemmung des Schnurendes (10) in der Schnurklemme (7) wird die Schnur (2) mittels der Umschnürungseinrichtung (6) um die auf der Warenauflage (3) liegende Ware (1) so lange herumgeführt, bis die Wicklungen (11) der Schnur (2) selbsthemmend auf der Ware (1) halten,
b) die Schnurklemme (7) ist derart ausgebildet, daß sie das Schnurende (10) durch aktives Öffnen mit Beginn des Warenvorschubs (13) oder kurz nach dem Beginn eines Warenvorschubs (13) dadurch losläßt, daß sie die Klemmkraft zumindest im Zeitpunkt des Beginns des Warenvorschubs (13) derart vermindert, daß der beginnende Warenvorschub (13) das Schnurende (10) aus der Schnurklemme (7) zieht,
c) über der Warenauflage (3) ist eine Haltevorrichtung (18) für die Waren (1) vorgesehen, die diese für eine Umschnürung unter Ermöglichung eines Warenvorschubs (13) positioniert,
d) die Umschnürungswendel (12) werden mittels der Umschnürungseinrichtung (6) dadurch aufgebracht, daß diese bei gleichzeitigem Warenvorschub (13) die Ware (1) umrundet,
e) ein Umlenkelement (7') wird in eine Position verbracht, in der es die zwischen Ware (1) und Umschnürungseinrichtung (6) verlaufende Schnur (2) bei einer weiteren Umrundung durch die Umschnürungseinrichtung (6) aufnimmt,
f) die Schnurklemme (7) wird in eine Position verbracht, in der sie durch eine nochmalige Umrundung der Ware (1) durch die Umschnürungseinrichtung (6) die Schnur (2) unter Bildung einer um die Ware (1) gelegten Schlaufe (20) aufnimmt,
g) das Mittel (9) zum Verbinden (14) von Schnüren verbindet alle drei von der Ware (1) kommenden Schnurstränge (15, 16, 17) miteinander,
h) die Mittel (8) zum Durchtrennen von Schnüren trennen zwischen der Verbindung (14) der Schnurstränge (15, 16, 17) und der Schnurklemme (7) den zum Schnurvorrat (4) verlaufenden Schnurstrang (17) und mindestens einen weiteren über das Umlenkelement (7') verlaufenden Schnurstrang (15, 16).

2. Vorrichtung nach Anspruch 1,
**dadurch gekennzeichnet,**
**daß** die Schnurklemme (7) auch als Umlenkelement (7') dient und daß die Schnurklemme (7) bezüglich Klemmflächen und Klemmkraft derart eingerichtet ist, daß bei dem Herausziehen eines Schnurstrangs (15 oder 16) der zum Schnurvorrat (4) verlaufende Schnurstrang (17) in der Schnurklemme (7) verbleibt.

3. Vorrichtung nach Anspruch 1,
**dadurch gekennzeichnet,**
**daß** das Umlenkelement (7') neben der Schnurklemme (7) angeordnet ist und beide derart ausgebildet sind, daß sie wahlweise die von Umschnürungseinrichtung (6) kommende Schnur (2) aufnehmen können.

4. Vorrichtung nach Anspruch 1, 2 oder 3,
**dadurch gekennzeichnet,**
**daß** Mittel zum Einstellen der Klemmkraft der Schnurklemme (7) vorgesehen sind.

5. Vorrichtung nach Anspruch 4,
**dadurch gekennzeichnet,**
**daß** die Mittel zum Einstellen der Klemmkraft der Schnurklemme (7) derart ausgebildet sind, daß die Schnur (2) für den Arbeitsschritt a) derart straff gespannt werden kann, daß die selbsthemmenden Wicklungen (11) erzeugbar sind, für den Arbeitsschritt b) jedoch so gering geklemmt ist, daß sie durch einen beginnenden Warenvorschub (13) aus der Schnurklemme (7) gezogen wird, ohne daß die Schnur (2) nennenswert in die Ware (1) einschneidet.

6. Vorrichtung nach einem der Ansprüche 1 bis 5,
**dadurch gekennzeichnet,**
**daß** die Schnurklemme (7) mit Mitteln zur Bewirkung ihrer Öffnung ausgestattet ist.

7. Vorrichtung nach einem der Ansprüche 1 bis 6,
**dadurch gekennzeichnet,**
**daß** bei der Herstellung der Wicklungen (11) zur Festlegung der Schnur (2) an der Ware (1) - Arbeitsschritt a) - ein kleiner Teil des Warenvorschubs (13) stattfindet, um die zur Schnurklemme (7) verlaufende Schnur (2) durch Wicklungen (11) zu überdecken.

8. Vorrichtung nach einem der Ansprüche 1 bis 7,
**dadurch gekennzeichnet,**
**daß** ein Förderband (30) zur Bewirkung des Warenvorschubs (13) vorgesehen ist.

9. Vorrichtung nach einem der Ansprüche 1 bis 8,
**dadurch gekennzeichnet,**
**daß** das Mittel (9) zum Verbinden von Schnüren eine Verknotungseinrichtung ist.

10. Vorrichtung nach Anspruch 9,
**dadurch gekennzeichnet,**
**daß** vor oder während der Verknotung ein Verschieben (19) der Ware zur Verknotungseinrichtung stattfindet.

11. Vorrichtung nach Anspruch 10,
**dadurch gekennzeichnet,**
**daß** das Verschieben (19) durch den Zug der Verknotungseinrichtung an den Schnursträngen (15, 16, 17) erfolgt und daß die Haltevorrichtung (18) die Ware (1) in Verschieberichtung (19) freigibt.

12. Vorrichtung nach Anspruch 10,
**dadurch gekennzeichnet,**
**daß** Mittel zum Verschieben (19) der Ware (1) vorgesehen sind.

13. Vorrichtung nach Anspruch 1 bis 12,
**dadurch gekennzeichnet,**
**daß** die Schnurklemme (7) und die Umlenkeinrichtung (7') in ihre Positionen zur Aufnahme der Schnur (2) gemäß Arbeitsschritt e) und f) oder zur Deaktivierung der Schnuraufnahme durch Verschiebung derselben verbracht werden können.

14. Vorrichtung nach Anspruch 1 bis 12,
**dadurch gekennzeichnet,**
**daß** eine Schnurlenkung derart angeordnet und betätigbar ist, daß die von der Umschnürungseinrichtung (6) kommende Schnur (2) wahlweise in die Umlenkeinrichtung (7') oder in die Schnurklemme (7) legbar oder an diesen (7, 7') vorbeigeleitet werden kann.

15. Vorrichtung nach Anspruch 1 bis 14,
**dadurch gekennzeichnet,**
**daß** sie mit einer Warenfördereinrichtung für Zuführung und Abtransport der Waren (1) ausgestattet ist, daß mindestens ein mit der Steuerung verbundener Sensor vorgesehen ist, der die Positionen der geförderten Waren (1) erfaßt und daß mindestens ein mit der Steuerung verbundener Sensor vorgesehen ist, der die jeweilige Stellung der Umschnürungseinrichtung (6) erfaßt.

## Claims

1. A device for spirally wrapping a cord (2) around a good (1), the good (1) being arranged on a goods table (3), and the cord (2) being guided around the good (1) to be wrapped by means of a wrapping device (6) having a cord supply (4) and means (5) for guiding the cord (2), wherein a cord clamp (7), means for cutting (8) and means (9) for connecting cords (2) are used to fasten and cut the cord (2), and wherein the device is formed with a controller and drive means for carrying out the following steps by means of the likewise following design adaptations:
a) by clamping the cord end (10) in the cord clamp (7), the cord (2) is guided by means of the wrapping device (6) around the good (1) lying on the goods table (3) until the windings (11) of the cord (2) are held in a self-locking manner on the good (1),
b) the cord clamp (7) is designed such that it releases the cord end (10) by active opening when the good starts to advance (13) or shortly after the good starts to advance (13) in that it reduces the clamping force at least at the time that the good starts to advance (13) such that the starting advance (13) of the good pulls the cord end (10) out of the cord clamp (7),
c) a retaining device (18) for the goods (1), which positions the latter for wrapping while allowing the goods to advance (13), is provided over the goods table (3),
d) the wrapping spirals (12) are applied by means of the wrapping device (6) in that the latter circulates around the good (1) while the good advances (13),
e) a deflection element (7') is brought into a position in which it receives the cord (2) running between the good (1) and the wrapping device (6) as the wrapping device (6) continues to circulate,
f) the cord clamp (7) is brought into a position in which it receives the cord (2) as the wrapping device (6) circulates around the good (1) again, forming a loop (20) around the good (1),
g) the means (9) for connecting (14) cords connects all three cord strands (15, 16, 17) coming from the good (1) to one another,
h) the means (8) for cutting cords cut the cord strand (17) running to the cord supply (4) and at least one further cord strand (15, 16) running via the deflection element (7'), between the connection (14) of the cord strands (15, 16, 17) and the cord clamp (7).

2. The device according to Claim 1,
**characterised in that**
the cord clamp (7) also acts as a deflection element (7'), and the cord clamp (7) is designed in terms of its clamping faces and clamping force such that when one cord strand (15 or 16) is pulled out, the cord strand (17) running to the cord supply (4) remains in the cord clamp (7).

3. The device according to Claim 1,
**characterised in that**
the deflection element (7') is arranged next to the cord clamp (7) and both are designed such that they can receive the cord (2) coming from the wrapping device (6) .

4. The device according to Claim 1, 2 or 3,
**characterised in that**
means are provided to set the clamping force of the cord clamp (7).

5. The device according to Claim 4,
**characterised in that**
the means for setting the clamping force of the cord clamp (7) are designed such that the cord (2) can be tensioned for step a) taut enough for the self-locking windings (11) to be produced but is clamped for step b) slightly enough for it to be pulled out of the cord clamp (7) when the good starts to advance (13), without the cord (2) cutting significantly into the good (1).

6. The device according to any one of Claims 1 to 5,
**characterised in that**
the cord clamp (7) is equipped with means for opening same.

7. The device according to any one of Claims 1 to 6,
**characterised in that**
when the windings (11) are produced to fix the cord (2) in position on the good (1) - step a) - the good is advanced (13) slightly to cover the cord (2) running to the cord clamp (7) with windings (11).

8. The device according to any one of Claims 1 to 7,
**characterised in that**
a conveyor belt (30) is provided to advance (13) the good.

9. The device according to any one of Claims 1 to 8,
**characterised in that**
the means (9) for connecting cords is a knotting device.

10. The device according to Claim 9,
**characterised in that**
the good is displaced (19) towards the knotting device before or during knotting.

11. The device according to Claim 10,
**characterised in that**
the displacement (19) takes place by means of the knotting device pulling on the cord strands (15, 16, 17), and the retaining device (18) releases the good (1) in the displacement direction (19).

12. The device according to Claim 10,
**characterised in that**
means are provided to displace (19) the good (1).

13. The device according to Claims 1 to 12,
**characterised in that**
the cord clamp (7) and the deflection device (7') can be brought into their positions for receiving the cord (2) as in steps e) and f) or for deactivating receipt of the cord by displacing them.

14. The device according to Claims 1 to 12,
**characterised in that**
a cord directing means is arranged and can be actuated such that the cord (2) coming from the wrapping device (6) can either be placed into the deflection device (7') or into the cord clamp (7) or can be slid past them (7, 7').

15. The device according to Claims 1 to 14,
**characterised in that**
it is provided with a goods conveying device for feeding and discharging the goods (1), that at least one sensor is provided which is connected to the controller and detects the positions of the conveyed goods (1) and that at least one sensor is provided which is connected to the controller and detects each position of the wrapping device (6).

## Revendications

1. Dispositif pour le ficelage en forme de spirale d'un produit (1) avec un cordon (2), le produit (1) étant disposé sur un support de produit (3) et le cordon (2) passant autour du produit (1) à ficeler au moyen d'un dispositif de ficelage (6) avec une réserve de cordon (4) et des moyens (5) pour guider le cordon (2), une pince de cordon (7), des moyens pour sectionner (8) et des moyens (9) pour raccorder des cordons (2) servant à la fixation et au sectionnement du cordon (2) et le dispositif étant constitué avec une commande et des moyens d'entraînement pour l'exécution des étapes de travail suivantes au moyen des adaptations de conception également suivantes :
a) en serrant l'extrémité de cordon (10) dans la pince de cordon (7), le cordon (2) est passé autour du produit (1) situé sur le support de produit (3) au moyen du dispositif de ficelage (6) jusqu'à ce que les enroulements (11) du cordon (2) se maintiennent de façon autobloquante sur le produit (1),
b) la pince de cordon (7) est constituée de telle sorte qu'elle lâche l'extrémité de cordon (10) par ouverture active avec début de l'avance de produit (13) ou peu de temps après le début d'une avance de produit (13) par le fait qu'elle réduit la force de serrage au moins au moment du début de l'avance de produit (13) de telle sorte que l'avance de produit (13) commençant tire l'extrémité de cordon (10) hors de la pince de cordon (7),
c) un dispositif de retenue (18) pour les produits (1) est prévu sur le support de produit (3), qui positionne celui-ci pour un ficelage en permettant une avance de produit (13),
d) les spires de ficelage (12) sont appliquées au moyen du dispositif de ficelage (6) par le fait que celui-ci fait le tour du produit (1) lors de l'avance de produit (13) simultanée,
e) un élément de déviation (7') est transféré dans une position dans laquelle il reçoit le cordon (2) passant entre le produit (1) et le dispositif de ficelage (6) lors d'un autre passage autour effectué par le dispositif de ficelage (6),
f) la pince de cordon (7) est transférée dans une position dans laquelle elle reçoit le cordon (2) par un nouveau passage autour du produit (1) effectué par le dispositif de ficelage (6) en formant une boucle (20) posée autour du produit (1),
g) le moyen (9) pour relier (14) des cordons relie entre eux tous les trois brins de cordon (15,16,17) arrivant du produit (1),
h) les moyens (8) pour le sectionnement des cordons séparent entre la liaison (14) des brins de cordon (15,16,17) et la pince de cordon (7) le brin de cordon (7) passant vers la réserve de cordon (4) et au moins un autre brin de cordon (15,16) passant par l'élément de déviation (7').

2. Dispositif selon la revendication 1, en ce que la pince de cordon (7) sert également d'élément de déviation (7') et en ce que la pince de cordon (7) est agencée eu égard aux surfaces de serrage et à la force de serrage de telle sorte que lors de l'extraction d'un brin de cordon (15 ou 16), le brin de cordon (17) passant à la réserve de cordon (4) reste dans la pince de cordon (7) .

3. Dispositif selon la revendication 1, **caractérisé en ce que** l'élément de déviation (7') est disposé à côté de la pince de cordon (7) et les deux sont constitués de telle sorte qu'ils peuvent recevoir au choix le cordon (2) venant du dispositif de ficelage (6).

4. Dispositif selon la revendication 1, 2 ou 3, **caractérisé en ce que** des moyens sont prévus pour régler la force de serrage de la pince de cordon (7).

5. Dispositif selon la revendication 4, **caractérisé en ce que** les moyens pour régler la force de serrage de la pince de cordon (7) sont constitués de telle sorte que le cordon (2) peut être fortement tendu pour l'étape de travail a) de telle sorte que les enroulements autobloquants (11) peuvent être produits, est bloqué toutefois pour l'étape de travail b) si faiblement qu'il est tiré de la pince de cordon (7) par une avance de produit (13) débutante sans que le cordon (2) ne s'incise notablement dans le produit (1).

6. Dispositif selon l'une quelconque des revendications 1 à 5, **caractérisé en ce que** la pince de cordon (7) est dotée de moyens pour provoquer son ouverture.

7. Dispositif selon l'une quelconque des revendications 1 à 6, **caractérisé en ce que** lors de l'élaboration des enroulements (11), une petite partie de l'avance de produit (13) a lieu pour fixer le cordon (2) au produit (1) (étape de travail a)) pour recouvrir par des enroulements (11) le cordon (2) passant vers la pince de cordon (7).

8. Dispositif selon l'une quelconque des revendications 1 à 7, **caractérisé en ce qu'**une bande transporteuse (30) est prévue pour provoquer l'avance de produit (13).

9. Dispositif selon l'une quelconque des revendications 1 à 8, **caractérisé en ce que** le moyen (9) pour relier des cordons est un dispositif de nouage.

10. Dispositif selon la revendication 9, **caractérisé en ce qu'**un déplacement (19) du produit vers le dispositif de nouage a lieu avant ou pendant le nouage.

11. Dispositif selon la revendication 10, **caractérisé en ce que** le déplacement (19) a lieu par la traction du dispositif de nouage sur les brins de cordon (15,16,17) et **en ce que** le dispositif de retenue (18) libère le produit (1) dans la direction de déplacement (19).

12. Dispositif selon la revendication 10, **caractérisé en ce que** des moyens sont prévus pour le déplacement (19) du produit (1).

13. Dispositif selon les revendications 1 à 12, caractérisé ce que la pince de cordon (7) et le dispositif de déviation (7') peuvent être transférés dans leurs positions pour recevoir le cordon (2) selon les étapes de travail e) et f) ou pour désactiver la réception du cordon par déplacement de ceux-ci.

14. Dispositif selon les revendications 1 à 12, **caractérisé en ce qu'**une orientation du cordon est disposée et peut être actionnée de telle sorte que le cordon (2) venant du dispositif de ficelage (6) peut être au choix posé dans le dispositif de déviation (7') ou dans la pince de cordon (7) ou détourné sur ceux-ci (7,7').

15. Dispositif selon les revendications 1 à 14, **caractérisé en ce qu'**il est doté d'un dispositif de transport de produit pour acheminer et évacuer les produits (1), **en ce qu'**au moins un capteur relié à la commande est prévu, qui saisit les positions des produits (1) transportés et **en ce qu'**au moins un capteur relié à la commande est prévu qui saisit la position respective du dispositif de ficelage (6).
